# FASCICULE DE BREVET EUROPEEN

(11) **EP 3 295 619 B1**
(45) Date de publication et mention de la délivrance du brevet: **30.09.2020**
(21) Numéro de dépôt: 16722325.4
(22) Date de dépôt: 29.04.2016
(51) Int. Cl.: H04L 12/741, H04L 12/755, H04L 12/707

(54) **RESEAU D'EQUIPEMENTS INTERCONNECTES PAR DES COMMUTATEURS INTEGRANT DES TABLES DE ROUTAGE**
NETZWERK VON DURCH SCHALTER VERBUNDENEN VORRICHTUNGEN MIT ROUTING-TABELLEN
NETWORK OF EQUIPMENT INTERCONNECTED BY SWITCHES INCORPORATING ROUTING TABLES

(30) Priorité: 13.05.2015 FR 1554289
(43) Date de publication de la demande: 21.03.2018
(73) Titulaire: Bull SAS, 78340 Les Clayes-sous-Bois (FR)
(72) Inventeur: VIGNERAS, Pierre, 91470 Angervilliers (FR); QUINTIN, Jean Noël, 92340 Bourg La Reine (FR)
(74) Mandataire: Plasseraud IP
(86) Numéro de dépôt international: PCT/FR2016/051012
(87) Numéro de publication internationale: WO 2016/181050

(56) Documents cités:
- EP-A1- 2 437 446
- EP-A1- 2 498 456
- WO-A1-01/76269
- US-A- 6 097 718

## Description

### DOMAINE DE L'INVENTION

L'invention concerne un réseau d'équipements interconnectés par des commutateurs intégrant des tables de routage, ainsi qu'un procédé de mise à jour des tables de routage de ce réseau d'équipements interconnectés par des commutateurs intégrant des tables de routage.

### CONTEXTE DE L'INVENTION

Selon un art antérieur, il est connu un réseau dans lequel, lors de chaque panne d'équipement ou lors de chaque récupération d'équipement, l'ensemble des tables de routage est recalculé et directement chargé sur l'ensemble des commutateurs du réseau, sans pré-évaluation de l'efficacité de ces nouvelles tables de routage.

Le document 2437446 décrit un réseau d'équipements interconnectés par des commutateurs intégrant des tables de routage, comprenant un gestionnaire de tables de routage qui recalcule, en cas d'événement rendant inutilisable un élément de réseau, les tables de routage impactées par cet événement.

### RESUME DE L'INVENTION

Le but de la présente invention est de fournir un réseau et un procédé de mise à jour des tables de routage de ce réseau palliant au moins partiellement les inconvénients précités.

Plus particulièrement, l'invention vise à fournir un réseau et un procédé de mise à jour des tables de routage de ce réseau pouvant rendre simultanément simple et efficace la mise à jour des tables de routage dans un réseau, lorsqu'un événement, par exemple panne d'équipement ou récupération d'équipement, rend nécessaire cette mise à jour.

Pour rendre simultanément aussi simple et efficace que possible la mise à jour des tables de routage dans le réseau, l'invention se propose de résoudre une double problématique simultanée de la minimisation de la perturbation du réseau lors de la mise à jour des tables de routage et de la maximisation des performances du réseau pendant la mise à jour des tables de routage.

Pour cela, l'invention propose au niveau du réseau et du procédé de mise à jour des tables de routage, à la fois une amélioration au niveau architecture logicielle par un fonctionnement en bi-mode et au niveau architecture matérielle par la répartition des tables de routage sur plusieurs chargeurs distincts entre eux.

A cette fin, la présente invention propose un réseau d'équipements interconnectés par des commutateurs intégrant des tables de routage selon la revendication 1.

La présente demande décrit également un réseau d'équipements interconnectés par des commutateurs intégrant des tables de routage, comprenant un gestionnaire des tables de routage implémentant deux modes de fonctionnement : un mode de fonctionnement hors ligne dans lequel, toutes les tables de routage sont calculées dans un premier temps, puis chargées dans un deuxième temps dans les commutateurs, au moins lors du démarrage du réseau, un mode de fonctionnement en ligne dans lequel, en cas d'événement rendant inutilisable ou opérationnel un élément du réseau, seules les tables de routage impactées par ledit événement sont recalculées et chargées dans les commutateurs, lesdites tables de routage étant recalculées par un calculateur du gestionnaire de tables de routage, lesdites tables de routage recalculées étant chargées par plusieurs chargeurs de tables de routage du gestionnaire de tables de routage dans leurs groupes de commutateurs respectifs.

A cette fin, la présente invention propose aussi un procédé de mise à jour des tables de routage dans un réseau d'équipements interconnectés par des commutateurs intégrant des tables de routage selon la revendication 15.

La présente demande décrit également un procédé de mise à jour des tables de routage dans un réseau d'équipements interconnectés par des commutateurs intégrant des tables de routage, comprenant un gestionnaire des tables de routage implémentant deux modes de fonctionnement : un mode de fonctionnement hors ligne dans lequel, toutes les tables de routage sont calculées dans un premier temps, puis chargées dans un deuxième temps dans les commutateurs, au moins lors du démarrage du réseau, un mode de fonctionnement en ligne dans lequel, en cas d'événement rendant inutilisable ou opérationnel un élément du réseau, seules les tables de routage impactées par ledit événement sont recalculées et chargées dans les commutateurs, lesdites tables de routage étant recalculées par un calculateur du gestionnaire de tables de routage, lesdites tables de routage recalculées étant chargées par plusieurs chargeurs de tables de routage du gestionnaire de tables de routage dans leurs groupes de commutateurs respectifs.

Préférentiellement, dans le mode hors ligne, toutes les tables de routage sont calculées pour toute la topologie depuis le début et sont stockées, mais ne sont pas chargées dans un premier temps dans les commutateurs correspondants.

Préférentiellement, dans le mode en ligne, toutes les tables de routage ayant subi des modifications pour pouvoir contourner les pannes de liens ou d'équipements dans le réseau ou pour réintégrer les liens ou les équipements récupérés, sont calculées, sont stockées et sont chargées dans les commutateurs correspondants.

Dans une première forme dégradée de l'invention, où pour la double problématique simultanée de la minimisation de la perturbation du réseau lors de la mise à jour des tables de routage et de la maximisation des performances du réseau pendant la mise à jour des tables de routage, le premier aspect compte beaucoup plus que le second aspect, il est possible d'utiliser le fonctionnement en bi-mode sans la répartition des tables de routage sur plusieurs chargeurs.

Dans ce cas, il est alors proposé un réseau d'équipements interconnectés par des commutateurs intégrant des tables de routage, comprenant un gestionnaire des tables de routage implémentant deux modes de fonctionnement : un mode de fonctionnement hors ligne dans lequel, toutes les tables de routage sont calculées dans un premier temps, puis chargées dans un deuxième temps dans les commutateurs, au moins lors du démarrage du réseau, un mode de fonctionnement en ligne dans lequel, en cas d'événement rendant inutilisable ou opérationnel un élément du réseau, seules les tables de routage impactées par ledit événement sont recalculées et chargées dans les commutateurs.

Dans ce cas, il est alors également proposé un procédé de mise à jour des tables de routage dans un réseau d'équipements interconnectés par des commutateurs intégrant des tables de routage, comprenant un gestionnaire des tables de routage implémentant deux modes de fonctionnement : un mode de fonctionnement hors ligne dans lequel, toutes les tables de routage sont calculées dans un premier temps, puis chargées dans un deuxième temps dans les commutateurs, au moins lors du démarrage du réseau, un mode de fonctionnement en ligne dans lequel, en cas d'événement rendant inutilisable ou opérationnel un élément du réseau, seules les tables de routage impactées par ledit événement sont recalculées et chargées dans les commutateurs.

La présente demande décrit également, mais sans le revendiquer, que dans le cas, , où pour la double problématique simultanée de la minimisation de la perturbation du réseau lors de la mise à jour des tables de routage et de la maximisation des performances du réseau pendant la mise à jour des tables de routage, le premier aspect compte beaucoup moins que le second aspect, il est possible d'utiliser la répartition des tables de routage sur plusieurs chargeurs sans le fonctionnement en bi-mode.

Dans ce cas, il est alors proposé un réseau d'équipements interconnectés par des commutateurs intégrant des tables de routage, comprenant un gestionnaire des tables de routage comprenant : un calculateur de tables de routage adapté pour recalculer, en cas d'événement rendant inutilisable ou opérationnel un élément du réseau, seulement les tables de routage impactées par ledit événement, plusieurs chargeurs de tables de routage adaptés pour charger dans leurs groupes de commutateurs respectifs, seulement les tables de routage recalculées.

Dans ce cas, il est alors également proposé un procédé de mise à jour des tables de routage dans un réseau d'équipements interconnectés par des commutateurs intégrant des tables de routage, comprenant un gestionnaire des tables de routage comprenant : un calculateur de tables de routage adapté pour recalculer, en cas d'événement rendant inutilisable ou opérationnel un élément du réseau, seulement les tables de routage impactées par ledit événement, plusieurs chargeurs de tables de routage adaptés pour charger dans leurs groupes de commutateurs respectifs, seulement les tables de routage recalculées.

De cette manière, le calcul des tables de routage est découpé en deux parties. Dans une première partie, le gestionnaire de tables de routage fonctionne en mode hors ligne, mode dans lequel il peut calculer les tables de routage complètes sans réelle contrainte de temps. Dans une deuxième partie, le gestionnaire des tables de routage fonctionne en mode en ligne, mode dans lequel il ne va calculer que les modifications de tables de routage requises pour contourner la ou les pannes, le caractère limité de l'envergure de ces modifications permettant de mieux gérer la forte contrainte de temps existant dans ce mode en ligne.

Dans certains modes de réalisation, le mode hors ligne est utilisé au démarrage du réseau, pour initialiser l'ensemble des commutateurs du réseau. Les tables de routage ainsi calculées sont chargées dans un second temps, par exemple après leur validation par le gestionnaire de tables de routage. Une fois que les tables de routage sont chargées vers les commutateurs du réseau, le mode en ligne est lancé. Le gestionnaire des tables de routage charge les tables de routage précédentes dans sa mémoire, et s'abonne aux évènements provenant du réseau, comme par exemple la perte d'un lien entre équipements ou la récupération d'un lien entre équipements, ou comme par exemple la perte ou la récupération d'un équipement. Lorsqu'un évènement survient, par exemple de type panne ou récupération, le mode en ligne recalcule seulement les modifications nécessaires et suffisantes pour contourner cette panne, ou le cas échéant pour réutiliser un lien préalablement en panne à nouveau récupéré, c'est-à-dire devenu à nouveau disponible.

Ce mode en ligne confère ainsi deux avantages principaux. Un premier avantage est le temps de calcul réduit au strict nécessaire, ce qui a pour effet de permettre le masquage de la panne en réalisant l'opération en un temps inférieur au temps d'arrêt (« timeout » en langue anglaise) des applications MPI (pour « Message Passing Interface » en langue anglaise) qui est typiquement 10 secondes. Un deuxième avantage est l'impact qui est réduit au strict nécessaire ; en effet, seules quelques sous-parties du réseau sont impactées, réduisant alors d'autant le nombre global d'applications MPI qui sont impactées.

Dans certains modes de réalisation, le calcul des tables de routage sur un réseau comprenant N équipements terminaux, requiert le calcul de N² routes au minimum. Le support du routage adaptatif augmente encore significativement le nombre de ces routes à calculer. Lorsque N est grand, la panne d'un lien est une opération relativement courante qui devrait le moins possible impacter les applications. Recalculer l'ensemble des tables de routage permettant de contourner la ou les pannes requiert un temps de calcul qu'il est difficile de masquer aux applications. De plus, en recalculant ainsi l'ensemble des tables de routage, l'ensemble du réseau d'interconnexion va être impacté alors qu'une partie seulement du réseau était affectée par la panne.

Dans certains modes de réalisation, le temps de recalcul des tables de routage impactées par la panne ou la récupération d'un équipement ou d'un lien du réseau, est inférieure à 10 secondes, ce qui garantit une perturbation minimale des applications tournant sur le réseau.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un quelconque des objets précités de l'invention.

De préférence, le gestionnaire des tables de routage comprend un gestionnaire d'archives stockant au cours du temps d'une part les jeux de tables de routage ayant été utilisés dans le réseau et d'autre part les topologies de réseau correspondantes. Ainsi, un historique des configurations successives des tables de routage du réseau est disponible et peut être utilisé pour plusieurs fonctions.

De préférence, le dernier jeu de tables de routage archivé va être chargé dans le calculateur lors du prochain redémarrage du réseau. Ainsi, lors du prochain redémarrage du réseau, le réseau va pouvoir fonctionner avec un jeu de tables de routage adapté et pratiquement optimisé car la topologie du réseau sera très proche de celle correspondant au jeu de tables de routage stocké.

De préférence, le gestionnaire des tables de routage comprend un évaluateur de tables de routage adapté pour évaluer les performances d'un jeu de tables de routage en fonction de la topologie correspondante de réseau, avant que ce jeu de tables de routage ne soit envoyé aux chargeurs. Une évaluation fine et réaliste peut notamment être faite grâce à l'historique stocké des jeux de tables de routage successifs dans le temps permettant alors de valider et d'affiner les simulations futures par les réalisations passées.

De préférence, l'évaluateur vérifie, pour chaque jeu de tables de routage avant son envoi aux chargeurs, l'absence d'impasse dans la topologie correspondante du réseau, l'absence de boucle vivante dans la topologie correspondante du réseau, l'absence d'interblocage dans la topologie correspondante du réseau. Une impasse est une adresse qui n'existe pas, l'envoi d'un paquet de données vers cette adresse étant alors forcément perdu. Une boucle vivante est un paquet qui tourne indéfiniment sur plusieurs commutateurs sans jamais aller vers un équipement terminal de réseau. Un interblocage comprend des paquets bloqués en boucle, chaque paquet étant bloqué par le précédent. L'absence d'impasse, de boucle vivante et d'interblocage, élimine les plus gros risques de dysfonctionnement du réseau après le chargement du nouveau jeu de tables de routage.

Le gestionnaire de tables de routage a la capacité de stocker sur disque les tables de routage ainsi calculées sans les charger tout de suite vers les commutateurs, ce qui permet d'abord de les analyser, notamment au niveau de la qualité du routage. Les trois principales propriétés d'une bonne qualité de routage sont : l'absence d'interblocage (« deadlock » en langue anglaise), l'absence de boucle ouverte (« livelock » en langue anglaise), et l'absence d'impasse (« deadend » en langue anglaise). A ces trois principales propriétés peuvent se rajouter l'équilibrage des routes, c'est-à-dire pas de sur utilisation ni ne de sous-utilisation des liens existant entre équipements.

De préférence, le gestionnaire des tables de routage comprend une boucle de rétroaction de l'évaluateur vers le calculateur pour que le calculateur réalise un calcul itératif ou un recalcul itératif des tables de routage. Ainsi, les tables de routage vont être parfaitement optimisées dans la mesure où elles vont être recalculées tant qu'elles ne sont pas optimales.

De préférence, le calculateur implémente un algorithme de sélection des tables de routage à recalculer qui, en cas de panne d'un commutateur, d'une part sélectionne en priorité les commutateurs situés dans la couche amont et dans la couche aval par rapport au sens de transmission des données dans le réseau, et d'autre part ne sélectionne pas les commutateurs situés dans la même couche, par rapport au sens de transmission des données, que le commutateur tombé en panne. Il s'agit d'une part de stopper au plus près, en amont et en aval, les flots de paquets de données se dirigeant vers le commutateur tombé en panne, afin de les obliger à contourner le commutateur tombé en panne, et d'autre part de ne pas perturber ou de perturber le moins possible les flots de paquets de données qui contournent déjà le commutateur tombé en panne, car la circulation de ces flots est déjà adaptée à la panne du commutateur défectueux.

De préférence, les différents composants du gestionnaire de tables de routage tournent en tâches de fond, de préférence sous UNIX. Ainsi, d'une part les tables de routage sont recalculées de manière permanente et immédiate dès qu'un événement de type panne ou récupération d'équipement est détecté, et d'autre part, ces tables de routage sont recalculées sans gêner directement le déroulement du traitement de données ou du calcul de données effectué par l'ensemble des équipements du réseau à un moment donné.

De préférence, le calculateur implémente un algorithme de routage qui est adapté pour recalculer les tables de routage et qui est sans connaissance préalable de la topologie du réseau. Ainsi, cet algorithme de routage reste efficace quelle que soit l'endroit où la panne ou la récupération d'équipement survient, et quelle que soit l'évolution des pannes ou des récupérations au sein du réseau.

De préférence, le gestionnaire des tables de routage implémente une commande de charge des tables de routage dans les commutateurs. Cette commande supplémentaire permet au gestionnaire des tables de routage de lui-même charger les tables de routage dans les commutateurs, et ceci, de manière circonscrite à la stricte nécessité entraînée par la panne ou la récupération.

De préférence, le gestionnaire des tables de routage utilise un identifiant de connexion vers les mises à jour de statut des équipements du réseau. Cet identifiant de connexion permet au gestionnaire des tables de routage d'obtenir directement et par lui-même le statut des équipements du réseau dont l'évolution reflète l'évolution de la topologie du réseau.

De préférence, les équipements de réseau comprennent une majorité de nœuds de calcul. Le réseau comprend une minorité d'équipements intermédiaires, par exemple des commutateurs, et une majorité d'équipements terminaux, par exemple des nœuds de calcul. Tous les équipements sont reliés entre eux par des liens dans le réseau.

Le réseau comprend un grand nombre de nœuds de calcul, de préférence plus de 5000 nœuds de calcul, plus de préférence plus de 20000 nœuds de calcul, encore plus de préférence plus de 50000 de nœuds de calcul. Ce réseau est alors considéré comme un réseau d'interconnexion rapide à grande échelle.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple de déroulement du mode hors ligne dans le gestionnaire de tables de routage selon un mode de réalisation de l'invention.
La figure 2 représente schématiquement un exemple de déroulement du mode en ligne dans le gestionnaire de tables de routage selon un mode de réalisation de l'invention.

### DESCRIPTION DETAILLEE DE L'INVENTION

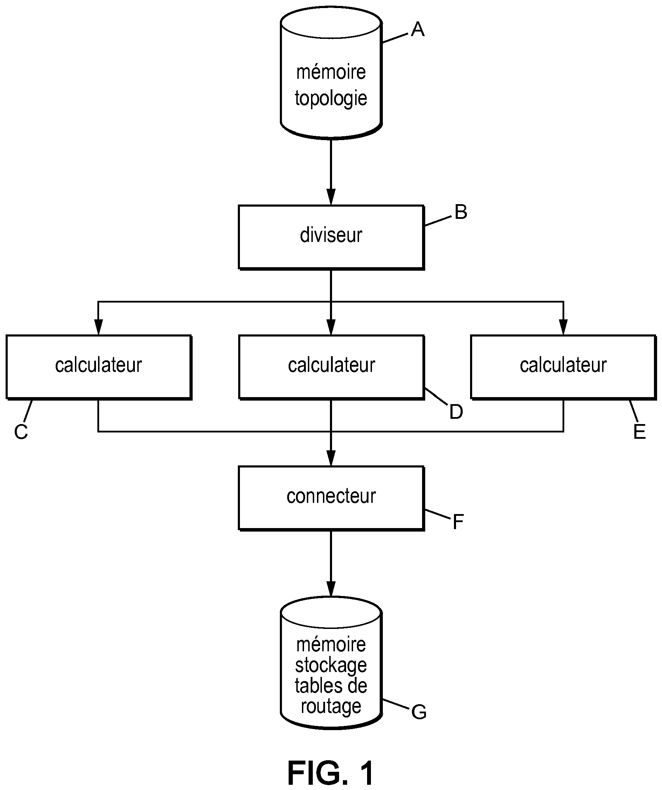

La figure 1 représente schématiquement un exemple de déroulement du mode hors ligne dans le gestionnaire de tables de routage selon un mode de réalisation de l'invention. En mode hors ligne, le gestionnaire de tables de routage comprend une mémoire A de topologie, un diviseur B de réseau en sous-parties, des calculateurs C, D et E, de sous-parties, un connecteur F de sous-parties en routes, une mémoire G de stockage de tables de routage. Seuls trois calculateurs C à E de sous-parties sont représentés pour la clarté de la figure 1, mais il en existe en général nettement plus.

La topologie du réseau est stockée dans la mémoire A. La topologie du réseau est transmise de la mémoire A vers le diviseur B. Le diviseur B sépare le réseau en sous-parties qui vont pouvoir être calculées séparément, respectivement par les trois calculateurs C à E. Une fois chaque sous-partie calculée séparément, les routes sont reconstituées à partir de ces sous-parties reliées entre elles par le connecteur F. Ces routes sont ensuite stockés dans la mémoire G, pour pouvoir être chargées dans les commutateurs le moment venu.

Le mode hors-ligne peut-être un matériel ou un logiciel prenant en entrée un nom d'algorithme et une topologie, par exemple sous la forme d'un fichier. Les tables de routage sont écrites en sortie en mémoire, laquelle mémoire peut être une mémoire flash, un mémoire ram, ou un disque mémoire. Le mode hors ligne utilise une commande annexe permettant de charger les tables de routage stockées dans la mémoire G, sur chaque commutateur du réseau d'interconnexion.

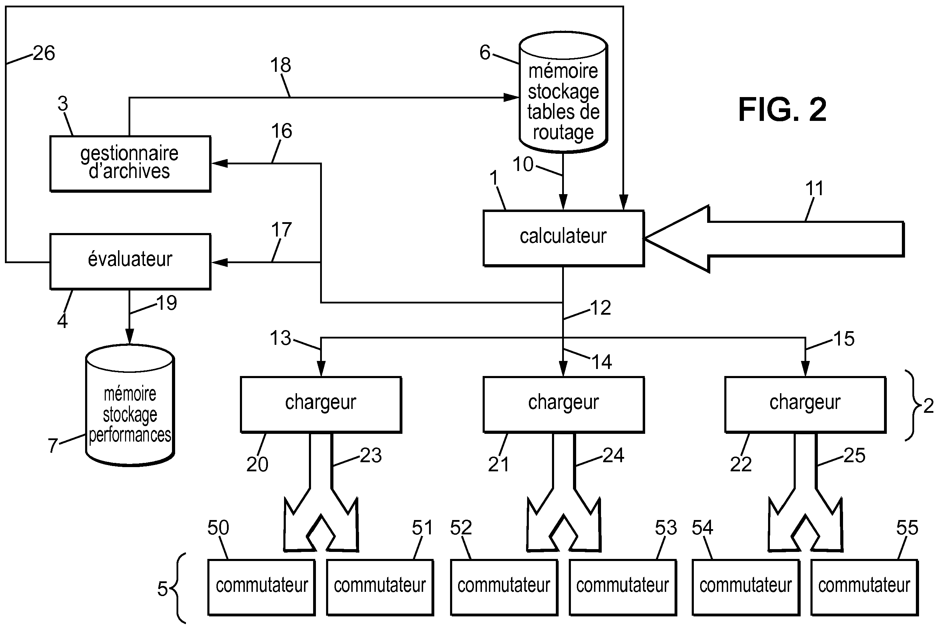

La figure 2 représente schématiquement un exemple de déroulement du mode en ligne dans le gestionnaire de tables de routage selon un mode de réalisation de l'invention. Le gestionnaire de tables de routage comprend un calculateur 1 des tables de routage, un ensemble 2 de chargeurs 20 à 22 des tables de routage dans les commutateurs, un gestionnaire d'archives 3 des jeux de tables de routage, un évaluateur 4 des jeux de tables de routage, un ensemble 5 de commutateurs 50 à 55, une mémoire 6 de stockage des jeux de tables de routage et des topologies associées de réseau, une mémoire 7 de stockage des performances des jeux de tables de routage. Seuls trois chargeurs 20 à 22 sont représentés pour la clarté de la figure 2, mais il en existe en général nettement plus. Seuls six commutateurs 50 à 55 sont représentés pour la clarté de la figure 2, mais il en existe en général nettement plus.

Un lien 10 permet la charge d'un jeu de tables de routage dans le calculateur 1. Un lien 11 permet au calculateur 1 de recevoir les mises à jour concernant les statuts des équipements du réseau. Un lien 12 permet la publication des modifications de tables de routage, préalablement calculées par le calculateur 1. Des liens 13 à 15 permettent l'envoi à chaque chargeur 20 à 22 des sous-ensembles de tables de routage qui lui sont associées. Des liens 23 à 25 permettent la distribution à chaque commutateur 50 à 55 des tables de routage qui lui sont associées, par exemple par l'intermédiaire du protocole SNMP (pour « Single Network Management Protocol » en langue anglaise). Le lien 16 permet l'envoi, au gestionnaire d'archives 3, de l'ensemble des tables de routage d'un jeu de tables de routage. Le lien 17 permet l'envoi, à l'évaluateur 4, de l'ensemble des tables de routage d'un jeu de tables de routage. Le lien 18 permet au gestionnaire d'archives 3 de stocker, dans la mémoire 6, le jeu de tables de routage en l'associant à la topologie correspondante de réseau. Le lien 19 permet à l'évaluateur 4 de stocker, dans la mémoire 7, les performances du jeu de tables de routage, préalablement évaluées par l'évaluateur 4. Un lien 26 permet une boucle de rétroaction de l'évaluateur 4 vers le calculateur 1, de manière à ce que, par itérations successives, l'évaluation des performances du jeu de tables de routage dans le réseau permette de recalculer ce jeu de tables de routage jusqu'à convergence.

Le mode en ligne est implémenté au travers de tâches de fond (« daemons » en langue anglaise) distribuées sous UNIX.

Le calculateur 1 reçoit les mises à jour des statuts des équipements du réseau en provenance du cœur de réseau, calcule les modifications des tables de routage et les publie. Le calculateur 1 n'a qu'un droit de lecture seule de la mémoire 6.

Les chargeurs 20 à 22 reçoivent certaines modifications des tables de routage, celles qui leur sont associées, et les charge dans les commutateurs 50 à 55 qui leur sont associés par l'intermédiaire du protocole SNMP.

Le gestionnaire d'archives 3 reçoit toutes les modifications des tables de routage et les stocke dans la mémoire 6. Le gestionnaire d'archives 3 a un droit de lecture de la mémoire 6 et un droit d'écriture de la mémoire 6.

L'évaluateur 4 reçoit toutes les modifications des tables de routage, réalise les évaluations des performances liées à ces modifications des tables de routage, et stocke ces performances évaluées dans la mémoire 7. L'évaluateur 4 a un droit de lecture de la mémoire 7 et un droit d'écriture de la mémoire 7.

Le mode en ligne peut être un matériel ou un logiciel prenant en entrée un nom d'algorithme, une topologie, et un identifiant de connexion vers les mises à jour des statuts des équipements du réseau, ledit statut pouvant être par exemple « équipement en panne » ou au contraire « équipement récupéré ». En sortie, le mode en ligne charge les modifications des tables de routage sur les commutateurs 50 à 55 et stocke aussi sur la mémoire 6, qui est par exemple une mémoire disque, le nouveau jeu de tables de routage.

Pour recalculer un jeu de tables de routage, un algorithme est utilisé, il peut par exemple être un algorithme en ligne pour PGFT (pour « Parallel Ports Generalized Fat-Tree » en langue anglaise) ou bien un algorithme en ligne sans connaissance de la topologie du réseau (« topology agnostic algorithm » en langue anglaise).

L'algorithme de recalcul en ligne des tables de routage va contourner les équipements ou les liens tombés en panne, réutiliser les liens ou les équipements réparés et à nouveau opérationnels, effectuer le recalcul dans une durée inférieure à la durée de temps mort des applications, généralement environ 10 secondes, qui tournent sur le réseau, détecter l'impossibilité de recalculer les tables de routage parce-que la topologie du réseau n'est plus routable et dans ce cas, en informer l'administrateur du système.

L'algorithme en ligne pour PGFT permet de calculer seulement des modifications de table de routage adaptées au contournement des pannes qui peuvent subvenir dans une topologie de type PGFT (« fat-tree » en langue anglaise). L'architecture en ligne permet d'utiliser cet algorithme afin de minimiser l'impact des pannes sur l'ensemble du réseau constituant un supercalculateur lorsqu'il est connecté comme un PGFT.

L'algorithme en ligne sans connaissance de la topologie du réseau permet de calculer seulement des modifications des tables de routage adaptées au contournement des pannes qui peuvent survenir dans n'importe quelle topologie. L'architecture en ligne permet d'utiliser cet algorithme afin de minimiser l'impact des pannes sur l'ensemble du réseau constituant un supercalculateur.

Une table de routage comprend généralement au moins les informations suivantes. D'abord, un identifiant de réseau. Ensuite, la prochaine étape (« next hop » ou « next gateway » en langue anglaise) qui est l'adresse du prochain élément de réseau auquel le paquet de données va être envoyé sur son chemin pour arriver à sa destination finale. Une table de routage peut également contenir un ou plusieurs des éléments suivants, afin de raffiner le routage des paquets de données. Par exemple, la qualité de service associée à la route. Par exemple, les listes d'accès associées à la route.

Bien entendu, la présente invention n'est pas limitée aux exemples et au mode de réalisation décrits et représentés, mais elle est susceptible de nombreuses variantes accessibles à l'homme de l'art.

## Revendications

1. Réseau d'équipements interconnectés par des commutateurs (50 à 55) intégrant des tables de routage, comprenant un gestionnaire des tables de routage, **caractérisé en ce que** ledit gestionnaire des tables de routage implémente deux modes de fonctionnement :
- un mode de fonctionnement hors ligne dans lequel, toutes les tables de routage sont calculées dans un premier temps, puis chargées dans un deuxième temps dans les commutateurs (50 à 55), au moins lors du démarrage du réseau,
- un mode de fonctionnement en ligne dans lequel, en cas d'événement rendant inutilisable ou opérationnel un élément du réseau, seules les tables de routage impactées par ledit événement sont recalculées et chargées dans les commutateurs (50 à 55).

2. Réseau selon la revendication 1, **caractérisé en ce que** :
- dans ledit mode de fonctionnement en ligne,
∘ lesdites tables de routage sont recalculées par un calculateur (1) du gestionnaire de tables de routage,
∘ lesdites tables de routage recalculées sont chargées par plusieurs chargeurs (20 à 22) de tables de routage du gestionnaire de tables de routage dans leurs groupes de commutateurs (50 à 55) respectifs.

3. Réseau selon la revendication 2, **caractérisé en ce que** le gestionnaire des tables de routage comprend un gestionnaire d'archives (3) stockant au cours du temps d'une part les jeux de tables de routage ayant été utilisés dans le réseau et d'autre part les topologies de réseau correspondantes.

4. Réseau selon la revendication 3, **caractérisé en ce que** le dernier jeu de tables de routage archivé va être chargé dans le calculateur (1) lors du prochain redémarrage du réseau.

5. Réseau selon l'une quelconque des revendications précédentes, **caractérisé en ce que** le gestionnaire des tables de routage comprend un évaluateur (4) de tables de routage adapté pour évaluer les performances d'un jeu de tables de routage en fonction de la topologie correspondante de réseau, avant que ce jeu de tables de routage ne soit envoyé aux chargeurs (20 à 22).

6. Réseau selon la revendication 5, **caractérisé en ce que** l'évaluateur (4) vérifie, pour chaque jeu de tables de routage avant son envoi aux chargeurs (20 à 22), l'absence :
- d'impasse dans la topologie correspondante du réseau,
- de boucle vivante dans la topologie correspondante du réseau,
- d'interblocage dans la topologie correspondante du réseau.

7. Réseau selon l'une quelconque des revendications 5 à 6, **caractérisé en ce que** le gestionnaire des tables de routage comprend une boucle de rétroaction (26) de l'évaluateur (4) vers le calculateur (1) pour que le calculateur (1) réalise un calcul itératif ou un recalcul itératif des tables de routage.

8. Réseau selon l'une quelconque des revendications précédentes et dépendant de la revendication 2, **caractérisé en ce que** le calculateur (1) implémente un algorithme de sélection des tables de routage à recalculer qui, en cas de panne d'un commutateur (50 à 55), d'une part sélectionne en priorité les commutateurs (50 à 55) situés dans la couche amont et dans la couche aval par rapport au sens de transmission des données dans le réseau, et d'autre part ne sélectionne pas les commutateurs (50 à 55) situés dans la même couche, par rapport au sens de transmission des données, que le commutateur (50 à 55) tombé en panne.

9. Réseau selon l'une quelconque des revendications précédentes, **caractérisé en ce que** les différents composants du gestionnaire de tables de routage tournent en tâches de fond, de préférence sous UNIX.

10. Réseau selon l'une quelconque des revendications précédentes, **caractérisé en ce que** le calculateur implémente un algorithme de routage qui est adapté pour recalculer les tables de routage et qui est sans connaissance préalable de la topologie du réseau.

11. Réseau selon l'une quelconque des revendications précédentes, **caractérisé en ce que** le gestionnaire des tables de routage implémente une commande de charge des tables de routage dans les commutateurs (50 à 55).

12. Réseau selon l'une quelconque des revendications précédentes, **caractérisé en ce que** le gestionnaire des tables de routage utilise un identifiant de connexion vers les mises à jour de statut des équipements du réseau.

13. Réseau selon l'une quelconque des revendications précédentes, **caractérisé en ce que** les équipements de réseau comprennent une majorité de nœuds de calcul.

14. Réseau selon la revendication 13, **caractérisé en ce que** le réseau comprend plus de 5000 nœuds de calcul, de préférence plus de 20000 de nœuds de calcul.

15. Procédé de mise à jour des tables de routage dans un réseau d'équipements interconnectés par des commutateurs (50 à 55) intégrant des tables de routage, comprenant un gestionnaire des tables de routage, **caractérisé en ce que** le gestionnaire des tables de routage implémente deux modes de fonctionnement :
- un mode de fonctionnement hors ligne dans lequel, toutes les tables de routage sont calculées dans un premier temps, puis chargées dans un deuxième temps dans les commutateurs (50 à 55), au moins lors du démarrage du réseau,
- un mode de fonctionnement en ligne dans lequel, en cas d'événement rendant inutilisable ou opérationnel un élément du réseau, seules les tables de routage impactées par ledit événement sont recalculées et chargées dans les commutateurs (50 à 55).

16. Procédé selon la revendication 15, **caractérisé en ce que** :
- dans ledit mode de fonctionnement en ligne,
∘ lesdites tables de routage sont recalculées par un calculateur (1) du gestionnaire de tables de routage,
∘ lesdites tables de routage recalculées sont chargées par plusieurs chargeurs (20 à 22) de tables de routage du gestionnaire de tables de routage dans leurs groupes de commutateurs (50 à 55) respectifs.

## Patentansprüche

1. Netzwerk von durch Switches (50 bis 55) miteinander verbundenen Geräten, die Routing-Tabellen enthalten, mit einem Routing-Tabellen-Manager, **dadurch gekennzeichnet, dass** der Routing-Tabellen-Manager zwei Betriebsarten implementiert:
- eine Offline-Betriebsart, bei der alle Routing-Tabellen in einem ersten Schritt berechnet und dann in einem zweiten Schritt in die Switches (50 bis 55) geladen werden, wenigstens beim Hochfahren des Netzwerks,
- eine Online-Betriebsart, bei der im Falle eines Ereignisses, das ein Element des Netzwerks unbrauchbar oder betriebsbereit macht, nur die von diesem Ereignis betroffenen Routing-Tabellen neu berechnet und in die Switches (50 bis 55) geladen werden.

2. Netzwerk nach Anspruch 1, **dadurch gekennzeichnet, dass**:
- in der Online-Betriebsart,
∘ die Routing-Tabellen von einem Computer (1) des Routing-Tabellen-Managers neu berechnet werden,
∘ die neu berechneten Routing-Tabellen durch eine Vielzahl von Routing-Tabellen-Ladern (20 bis 22) des Routing-Tabellen-Managers in ihre jeweiligen Switch-Gruppen (50 bis 55) geladen werden.

3. Netzwerk nach Anspruch 2, **dadurch gekennzeichnet, dass** der Routing-Tabellen-Manager einen Archiv-Manager (3) umfasst, der im Laufe der Zeit einerseits die Sätze von Routing-Tabellen, die im Netzwerk verwendet wurden, und andererseits die entsprechenden Netzwerktopologien speichert.

4. Netzwerk nach Anspruch 3, **dadurch gekennzeichnet, dass** der letzte archivierte Routing-Tabellen-Satz beim nächsten Netzwerk-Neustart in den Computer (1) geladen wird.

5. Netzwerk nach einem der vorhergehenden Ansprüche, **dadurch gekennzeichnet, dass** der Routing-Tabellen-Manager einen Routing-Tabellen-Auswerter (4) umfasst, der dazu ausgebildet ist, die Leistung eines Routing-Tabellen-Satzes gemäß der entsprechenden Netzwerktopologie auszuwerten, bevor dieser Routing-Tabellen-Satz an die Lader (20-22) gesendet wird.

6. Netzwerk nach Anspruch 5, **dadurch gekennzeichnet, dass** der Auswerter (4) für jeden Routing-Tabellen-Satz vor dem Senden an die Lader (20 bis 22) das Nicht-Vorliegen der folgenden Punkte überprüft:
- Blockierung in der entsprechenden Netzwerktopologie,
- Live-Loop in der entsprechenden Netzwerktopologie,
- Deadlock in der entsprechenden Netztopologie.

7. Netzwerk nach einem der Ansprüche 5 bis 6, **dadurch gekennzeichnet, dass** der Routing-Tabellen-Manager eine Rückkopplungsschleife (26) vom Auswerter (4) zum Rechner (1) umfasst, damit der Rechner (1) eine iterative Berechnung oder eine iterative Neuberechnung der Routing-Tabellen durchführt.

8. Netzwerk nach einem der vorhergehenden Ansprüche und abhängig von Anspruch 2, **dadurch gekennzeichnet, dass** der Computer (1) einen Algorithmus zur Auswahl der neu zu berechnenden Routing-Tabellen implementiert, der im Falle des Versagens eines Switches (50 bis 55) einerseits bevorzugt die in der stromaufwärtigen Schicht und in der stromabwärtigen Schicht befindlichen Switches (50 bis 55) in Bezug auf die Richtung der Datenübertragung im Netzwerk auswählt, und andererseits die in derselben Schicht befindlichen Switches (50 bis 55) in Bezug auf die Richtung der Datenübertragung nicht auswählt, wenn der Switch (50 ä 55) ausfällt.

9. Netzwerk nach einem der vorhergehenden Ansprüche, **dadurch gekennzeichnet, dass** die einzelnen Komponenten des Routingtabellen-Managers im Hintergrund laufen, vorzugsweise unter UNIX.

10. Netzwerk nach einem der vorhergehenden Ansprüche, **dadurch gekennzeichnet, dass** der Computer einen Routing-Algorithmus implementiert, der dazu ausgebildet ist, die Routing-Tabellen neu zu berechnen und der keine vorherige Kenntnis der Netzwerktopologie hat.

11. Netzwerk nach einem der vorhergehenden Ansprüche, **dadurch gekennzeichnet, dass** der Routing-Tabellen-Manager eine Laststeuerung der Routing-Tabellen in den Switches (50 bis 55) implementiert.

12. Netzwerk nach einem der vorhergehenden Ansprüche, **dadurch gekennzeichnet, dass** der Routing-Tabellen-Manager eine Verbindungskennung zur Statusaktualisierung des Netzwerks verwendet.

13. Netzwerk nach einem der vorhergehenden Ansprüche, **dadurch gekennzeichnet, dass** die Netzwerkgeräte eine Mehrzahl von Rechenknoten umfassen.

14. Netzwerk nach Anspruch 13, **dadurch gekennzeichnet, dass** das Netzwerk mehr als 5.000 Rechenknoten, vorzugsweise mehr als 20.000 Rechenknoten, umfasst.

15. Verfahren zum Aktualisieren von Routing-Tabellen in einem Netzwerk von durch Switches (50 bis 55) miteinander verbundenen Geräten, die Routing-Tabellen enthalten, mit einem Routing-Tabellen-Manager, **dadurch gekennzeichnet, dass** der Routing-Tabellen-Manager zwei Betriebsarten implementiert:
- eine Offline-Betriebsart, bei der alle Routing-Tabellen in einem ersten Schritt berechnet und dann in einem zweiten Schritt in die Switches (50 bis 55) geladen werden, wenigstens beim Hochfahren des Netzwerks,
- eine Online-Betriebsart, bei der im Falle eines Ereignisses, das ein Element des Netzwerks unbrauchbar oder betriebsbereit macht, nur die von diesem Ereignis betroffenen Routing-Tabellen neu berechnet und in die Switches (50 bis 55) geladen werden.

16. Verfahren nach Anspruch 15, **dadurch gekennzeichnet, dass** :
- in der Online-Betriebsart,
∘ die Routing-Tabellen von einem Computer (1) des Routing-Tabellen-Managers neu berechnet werden,
∘ die neu berechneten Routing-Tabellen durch eine Vielzahl von Routing-Tabellen-Ladern (20 bis 22) des Routing-Tabellen-Managers in ihre jeweiligen Switch-Gruppen (50 bis 55) geladen werden.

## Claims

1. A network of equipment interconnected by switches (50 to 55) incorporating routing tables, comprising a routing table manager, **characterised in that** said routing table manager implements two modes of operation:
- an offline mode of operation in which all the routing tables are calculated initially, then loaded subsequently into the switches (50 to 55), at least when booting up the network,
- an online mode of operation in which, in case of an event rendering an element of the network unusable or operational, only the routing tables impacted by said event are recomputed and loaded into the switches (50 to 55).

2. The network according to claim 1, **characterised in that**:
- in said online mode of operation,
o said routing tables are recomputed by a computer (1) of the routing table manager,
∘ said recomputed routing tables are loaded by several loaders (20 to 22) of routing tables of the routing table manager into their groups of respective switches (50 to 55).

3. The network according to claim 2, **characterised in that** the routing table manager comprises an archive manager (3) storing over time on the one hand the sets of routing tables that have been used in the network and on the other hand the corresponding network topologies.

4. The network according to claim 3, **characterised in that** the last set of routing tables archived will be loaded into the computer (1) during the next booting up of the network.

5. The network according to any preceding claim, **characterised in that** the routing table manager comprises a routing table evaluator (4) adapted to evaluate the performance of a set of routing tables according to the corresponding network topology, before this set of routing tables is sent to the loaders (20 to 22).

6. The network according to claim 5, **characterised in that** the evaluator (4) verifies, for each set of routing tables before the sending thereof to the loaders (20 to 22), the absence:
- of an impasse in the corresponding topology of the network,
- of a live loop in the corresponding topology of the network,
- of a deadlock in the corresponding topology of the network.

7. The network according to any of claims 5 to 6, **characterised in that** the routing table manager comprises a feedback loop (26) from the evaluator (4) to the computer (1) so that the computer (1) performs an iterative calculation or an iterative recalculation of the routing tables.

8. The network according to any preceding claim and depending on claim 2, **characterised in that** the computer (1) implements an algorithm for selecting routing tables to be recalculated which, in case of a breakdown of a switch (50 to 55), on the one hand selects with priority the switches (50 to 55) located in the upstream layer and in the downstream layer with respect to the direction of data transmission in the network, and on the other hand does not select the switches (50 to 55) located in the same layer, with respect to the direction of data transmission, as the switch (50 to 55) that is broken down.

9. The network according to any preceding claim, **characterised in that** the different components of the routing table manager run in the background, preferably under UNIX.

10. The network according to any preceding claim, **characterised in that** the computer implements a routing algorithm that is adapted to recalculate the routing tables and which has no prior knowledge of the topology of the network.

11. The network according to any preceding claim, **characterised in that** the routing table manager implements a command for loading routing tables into the switches (50 to 55).

12. The network according to any preceding claim, **characterised in that** the routing table manager uses a connection identifier to the status updates of the equipment of the network.

13. The network according to any preceding claim, **characterised in that** the network equipment comprises a majority of calculation nodes.

14. The network according to claim 13, **characterised in that** the network comprises more than 5,000 calculation nodes, preferably more than 20,000 calculation nodes.

15. The method for updating routing tables in a network of equipment interconnected by switches (50 to 55) incorporating routing tables, comprising a routing table manager, **characterised in that** the routing table manager implements two modes of operation:
- an offline mode of operation in which all the routing tables are calculated initially, then loaded subsequently into the switches (50 to 55), at least when booting up the network,
- an online mode of operation in which, in case of an event rendering an element of the network unusable or operational, only the routing tables impacted by said event are recomputed and loaded into the switches (50 to 55).

16. The method according to claim 15, **characterised in that**:
- in said online mode of operation,
∘ said routing tables are recomputed by a computer (1) of the routing table manager,
∘ said recomputed routing tables are loaded by several loaders (20 to 22) of routing tables of the routing table manager into their groups of respective switches (50 to 55).
